Europäisches Patentamt

European Patent Office

Office européen des brevets

(11) Veröffentlichungsnummer : **0 660 552 A2**

(12) **EUROPÄISCHE PATENTANMELDUNG**

(21) Anmeldenummer : **94119211.4**

(22) Anmeldetag : **06.12.94**

(51) Int. Cl.[6] : **H04J 1/05,** H03H 17/00, H04J 1/08

(30) Priorität : **24.12.93 DE 4344597**

(43) Veröffentlichungstag der Anmeldung : **28.06.95 Patentblatt 95/26**

(84) Benannte Vertragsstaaten : **AT BE CH ES FR GB IT LI NL**

(71) Anmelder : **ANT Nachrichtentechnik GmbH Gerberstrasse 33 D-71522 Backnang (DE)**

(72) Erfinder : **Göckler, Dr. Heinz Elbinger Strasse 52 D-71522 Backnang (DE)**

(54) **Dropp-and-Add-Multiplexer zur Umsetzung und Aufbereitung eines Frequenzmultiplexsignals.**

(57)   Drop-and-Add-Multiplexer zur Umsetzung eines digitalen FDM-Signales mit hoher Kanalzahl und zur Aufnahme von Signalen weiterer Kanäle, wobei Einzelkanalsperren vorgesehen sind, in denen das ankommende FDM-Signal gefiltert wird, indem erwünschte Kanäle durchgelassen bzw. frequenzumgesetzt werden und freizuschaltende Kanalfrequenzen gesperrt werden, wobei Frequenzumsetzer vorgesehen sind, in denen die Signale ankommender Kanäle in andere Frequenzlagen umgesetzt und die Signale weiterer Kanäle jeweils in den hierfür vorgesehenen Frequenzbereich umgesetzt und die Ausgangssignale der Umsetzer und der Einzelkanalsperren zum abgehenden FDM-Signal zusammengefasst werden, wobei für die Einzelkanalsperren ein gemeinsamer erster Pfad vorgesehen ist, auf dem das FDM-in-Eingangssignal durchgeschaltet wird, und wobei der DROP-Pfad einer Einzelkanalsperre ein Einzelkanalbandfilter und einen Vorzeichen-Inverter aufweist, dadurch gekennzeichnet, daß die Durchlaßbandbreite in DROP-Zweig der Einzelkanalsperren größer ist als die Durchlaßbandbreite in einem Add- oder Frequenzumsetzungszweig.

Sehr modulare und unaufwendige Frequenzumsetzung mit nahezu beliebiger Kanalbelegung, wobei die Drop-Funktion die Elimination eines unerwünschten Kanals ohne störende Restspektralanteile ermöglicht. Einsatz in hochkanaligen Fernseh- und Rundfunkzubringerund Verteilnetzen.

RTPT–DFU

$\Delta a_{pp} < 0.2dB$

6,59MHz

$\Delta f = 205kHz$

$a_s > 75dB$

$-f_d$    0    $+f_d$ =3,295MHz    $+f_s$ =3,5MHz    f

RTPT–DROP

$\Delta a_{pp} = ?$

$\Delta f = 205kHz$

$a_s > 75dB$

$-f_d$    0    $+f_d$ =3,5MHz    $+f_s$ =3,705MHz    f

Kanalraster (± 3.5MHz)

$f_A/4 = 3{,}53\overline{45}$ MHz

Fig. 5'

EP 0 660 552 A2

FDM - in

NT

FDM -out

DDFU

IDFU

$f\,in$

$f\,out = f\,in$

neues Kanal - signal $s_a$

+

## Fig.5

Die Erfindung betrifft einen Drop-and-Add-Multiplexer zur Umsetzung eines FDM-Signales mit hoher Kanalzahl gemäß Oberbegriff des Anspruches 1. Digitale Frequenzumsetzer, welche durch Einzelkanalumsetzung in interpolierenden digitalen Frequenzumsetzern Frequenzmultiplexsignale insbesondere mit hoher Bandbreite und hoher Abtastfrequenz erzeugen, sind bekannt geworden durch die deutschen Offenlegungsschriften 40 26 477 und 40 41 632, wobei in der letzteren ein digitales Frequenzmultiplexumsetzverfahren mit Überabtastung beschrieben ist.

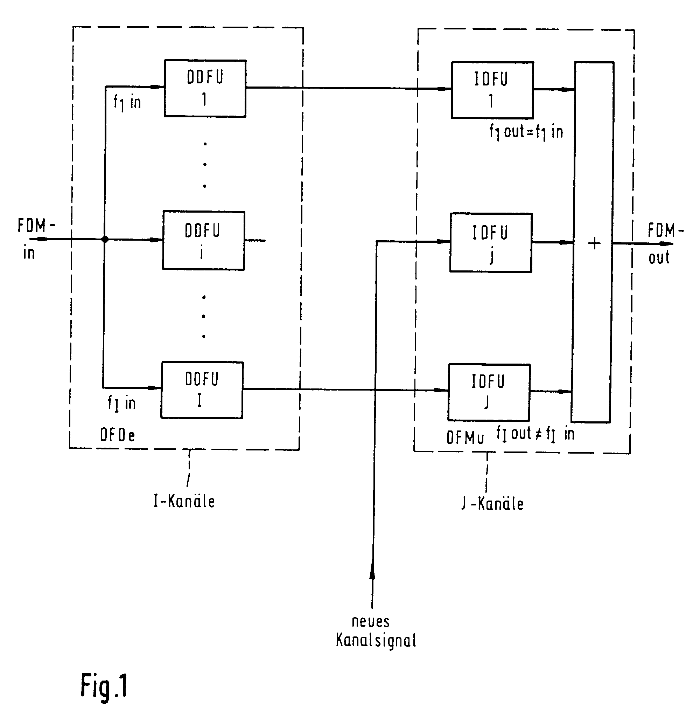

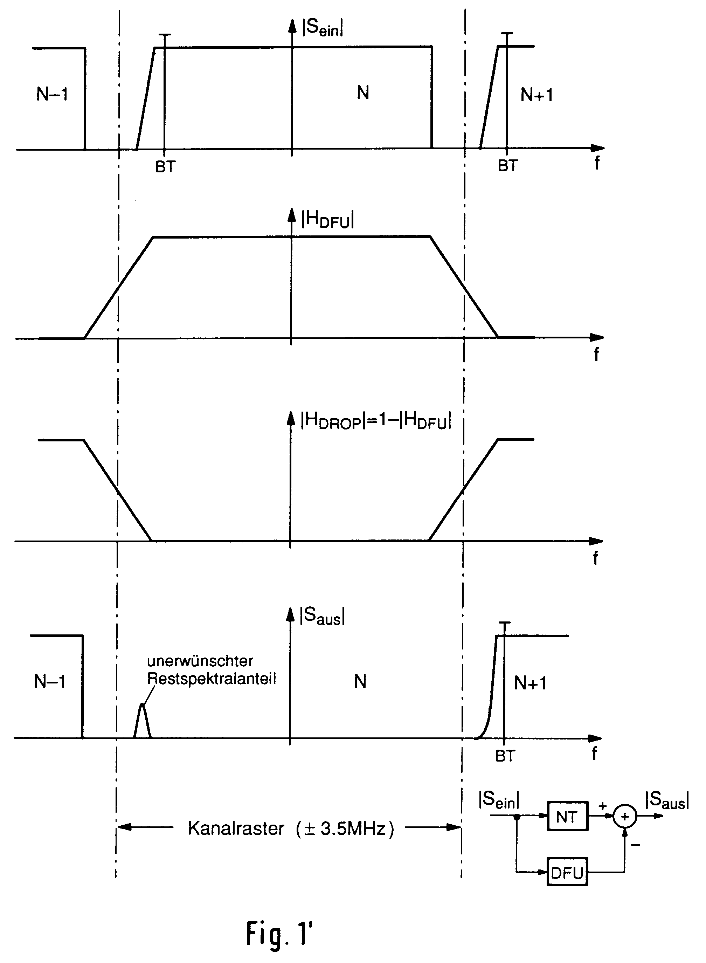

Mit den Mitteln des Standes der Technik ist es daher möglich, ein gegebenes digitales FDM-Signal mittels dezimierender digitaler Frequenzumsetzer in einem digitalen Frequenzdemultiplexer in die einzelnen Teilsignale zu zerlegen, diese Signale neu zu gruppieren bzw. einige Signale durch andere zu ersetzen, um sie anschließend mittels interpolierender digitaler Frequenzumsetzer in einem digitalen Frequenzmultiplexer zu einem neuen FDM-Signal zusammenzufassen, siehe Fig. 1. Unter der Annahme, daß im ursprünglichen FDM-in-Signal und im modifizierten FDM-out-Signal gleich viele Kanäle belegt sind (I=J), ist in Fig. 1 dargestellt, wie ein Kanalsignal, hier Kanal i durch ein anderes Kanalsignal (Kanal j) ersetzt wird. In diesem Fall kann der dezimierende digitale Frequenzumsetzer DDFUi entfallen. Die in beiden FDM-Signalen gemeinsam enthaltenen Kanalsignale können in Abhängigkeit von der Wahl der jeweiligen Umsetzerfrequenz bei unterschiedlichen Kanalfrequenzen d.h $f_i^{in} \neq f_i^{out}$ liegen ($f_{in}$, $f_{out}$ sind die Kanalfrequenzen (Lage der Kanäle im FDA-Spektrum)). Ferner ist es möglich, daß I ≠ J ist, wobei selbstverständlich alle DDFUs für zu eliminierende Kanalsignale entfallen können.

Der Hauptanmeldung lag die Aufgabe zugrunde, den Aufwand für einen digitalen Drop-and-Add-Frequenzmultiplexer stark zu reduzieren. Dabei soll die freie Verfügbarkeit zur Belegung der Kanäle voll erhalten sein.

Die Drop-and-Add-Funktionen gemäß der Hauptanmeldung lassen sich nach dem bisherigen Ansatz nur dann weitgehend kombinieren, wenn das letztlich bandbegrenzende Filter (RTP) nahezu ideal, also als ein Rechtecktiefpaß, realisierbar ist. Dies ist in der Praxis mit endlichem Aufwand nicht möglich. Tatsächlich weisen die bisher sowohl für die Drop-Funktion als auch für die Add-Funktion gleichermaßen eingesetzten RTP-Filter Übergangsbereiche endlicher Breite auf. Legt man, wie in Figur 1' gezeigt, diese endlichen Übergangsbereiche etwa mit ihrer Mitte auf die Kanalraster Grenzfrequenzen, so entstehen im Nutzspektrum unerwünschte Restspektralanteile gemäß Figur 1' unten im FDM-Ausgangssignal.

Der vorliegenden Erfindung lag die Aufgabe zugrunde, den Drop-and-Add-Frequenzmultiplexer gemäß der Hauptanmeldung so zu verbessern, daß bei der Elimination von Kanalspektren keine unerwünschten Restspektralanteile mehr erzeugt werden.

Die Lösung dieser Aufgabe erfolgt durch die Mittel des Anspruches 1. Vorteilhafte Ausgestaltungen ergeben sich durch die Unteransprüche.

Der erfindungsgemäße Drop-and-Add-Multiplexer weist die Vorteile auf, daß bei der Elimination eines zu ersetzenden Kanals an den Bandkanten keine unerwünschten Restspektralanteile mehr auftreten. Der Aufwand hierfür ist nicht wesentlich größer als bei dem Multiplexer gemäß der Hauptanmeldung.

Mit dem erfindungsgemäßen DAMUX ist es auch möglich, die Realisierungen eines DAMUX für den verschiedensten Anwendungsbereich wie Tonrundfunk, Fernsehverteilung, digitaler Satellitenrundfunk, usw. zu vereinheitlichen.

Es folgt nun die Beschreibung der Erfindung anhand der Figuren.

In der Figur 2 ist das Prinzip des erfindungsgemäßen Drop-and-Add-Frequenzmultiplexers gemäß Hauptanmeldung niedergelegt.

Die Figur 3 zeigt drei Möglichkeiten für die Realisierung einer Einzelkanalsperre.

In Figur 4 ist die Realisierung der Funktion Änderung der Kanalbelegung mit weiter vermindertem und mit minimalem Aufwand gezeichnet.

In Figur 5 ist eine aufwandsminimale Struktur für die Funktion der Ersetzung eines Kanalsignals offengelegt.

Die Figur 6 schließlich zeigt eine detaillierte Schaltung für die Ersetzung eines Kanalsignals durch ein anderes bei der selben Frequenz, und in Figur 7 ist eine aufwandsgünstige Modifikation eines Teils der Figur 6 gezeichnet.

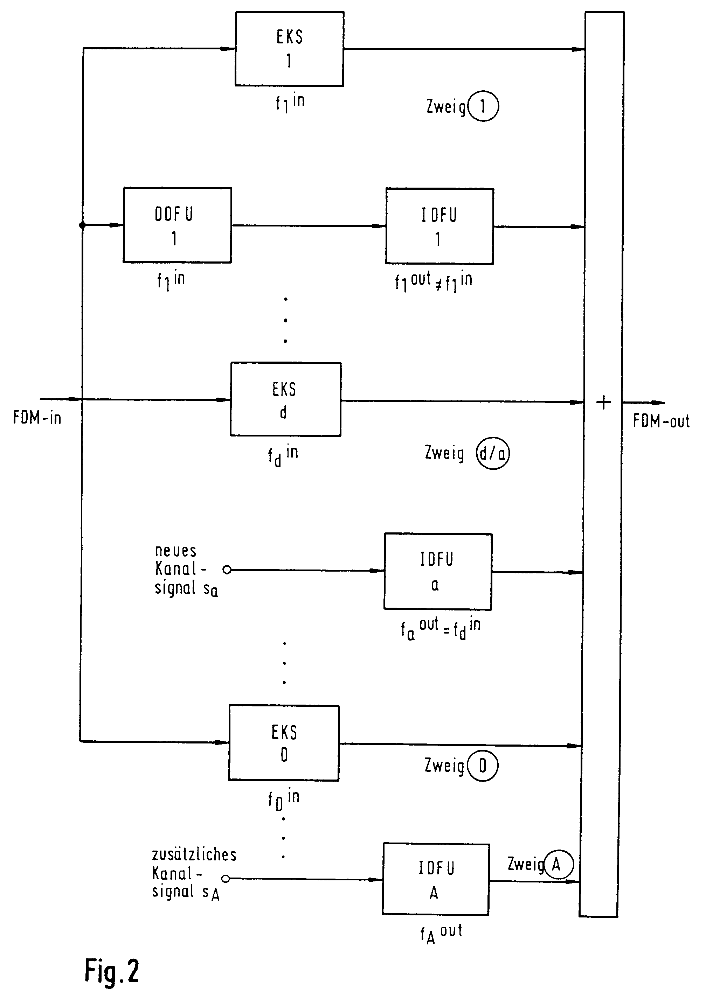

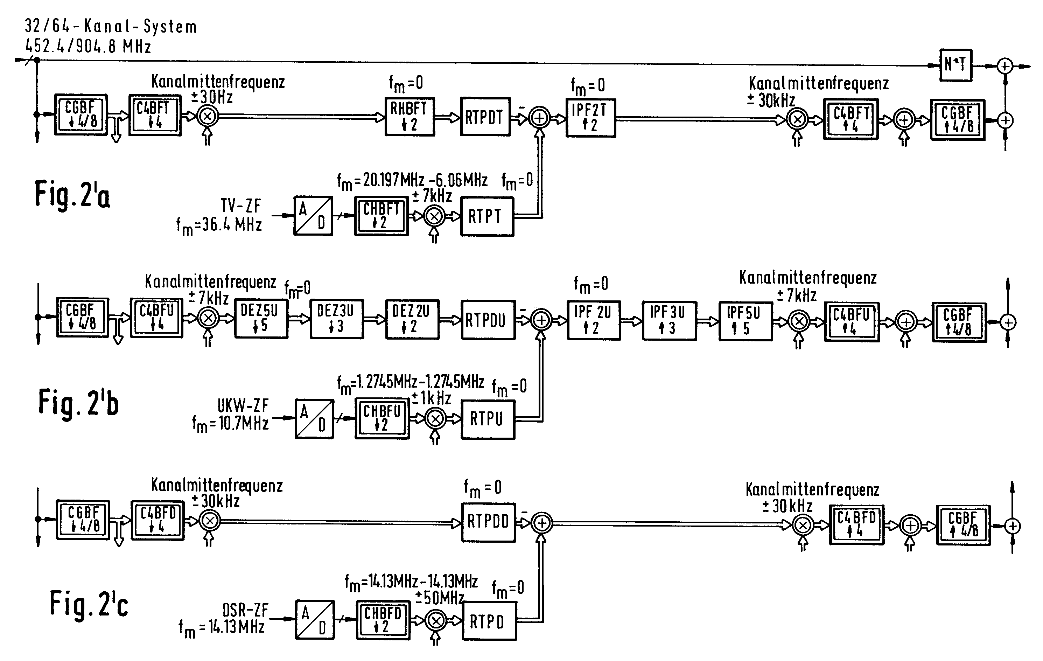

Die Grundstruktur einer DAMUX-Schaltungsanordnung ist in Figur 2 dargestellt. Es sind vier Zweige herausgehoben, die unterschiedliche Funktionen wahrnehmen. In Zweig 1 wird mit einer hochselektiven Einzelkanalsperre EKS, d.h. einem breitbandigen Filter mit schmaler Ausblendlücke, aus dem ankommenden FDM-in-Signal der bei $f_1^{in}$ liegende Kanal ausgeblendet. Mit einem digitalen dezimierenden Frequenzumsetzer DDFU1 wird dieses Kanalsignal separiert und mit einem nachgeschalteten interpolierenden digitalen Frequenzumsetzer IDFU1 in einen leeren Kanal bei $f_1^{out} = f_1^{in}$ des abgehenden FDM-out-Signals eingefügt. In Zweig 1 wird demnach eine Änderung der Kanalanordnung oder Kanalbelegung bewirkt. (Drop-Add-Zweig $f^{out} \neq f^{in}$).

Im Zweig d/a wird ein Kanalsignal durch ein neues im ankommenden FDM-Signal nicht vorhandenes Kanalsignal ersetzt. Dazu wird mit einer Einkanalsperre EKSd aus dem ankommenden FDM-in-Signal das bei $f_d^{in}$ liegende Kanalsignal eliminiert. Mit einem interpolierenden digitalen Frequenzumsetzer IDFUa wird im Zweig a in eben diesen Kanal das neue Ka-

nalsignal $s_a$ eingefügt, wobei $f_a^{out} = f_d^{in}$ gilt. (Drop-Add-Zweig $f^{out} \neq f^{in}$).

Der Zweig D bewirkt die Elimination eines Kanalsignals bei $f_D^{in}$ wie bei Zweig 1 bereits beschrieben, ohne daß dieses Signal im Ausgangssignal FDM-out-Signal erscheint und ohne daß in die entstehende Frequenzlücke ein anderes Kanalsignal eingefügt wird (Drop-Zweig).

Im Zweig A wird ein zusätzliches Kanalsignal $s_A$ in eine vorhandene Frequenzlücke eingefügt (Add-Zweig).

Bei einem digitalen Drop-and-Add-Frequenzmultiplexer ist in der Regel die Anzahl D der zu eliminierenden Kanäle klein gegen I und die Anzahl A der zu addierenden Kanäle klein gegen J der Figur 1; deshalb ist der Gesamtaufwand von Figur 2 gegenüber Figur 1 deutlich reduziert, auch wenn zunächst über den Aufwand von EKS nichts bekannt ist.

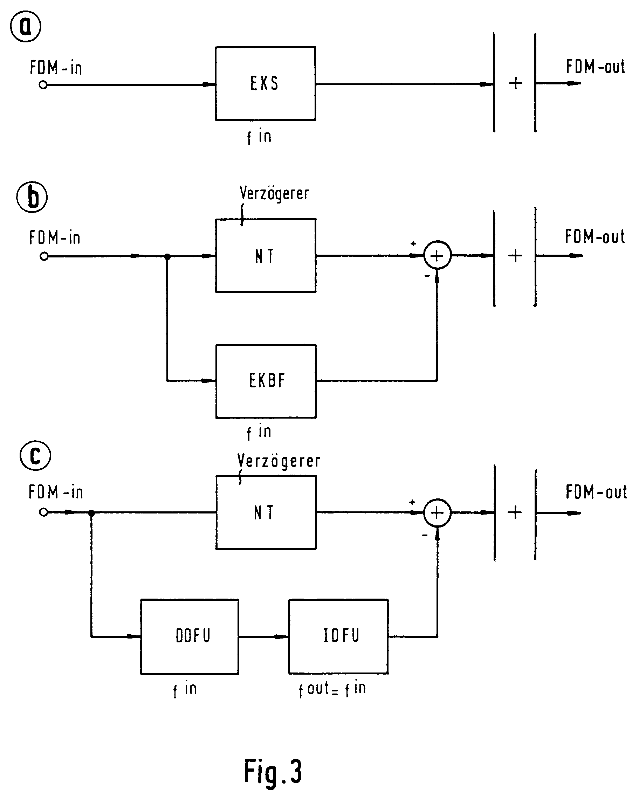

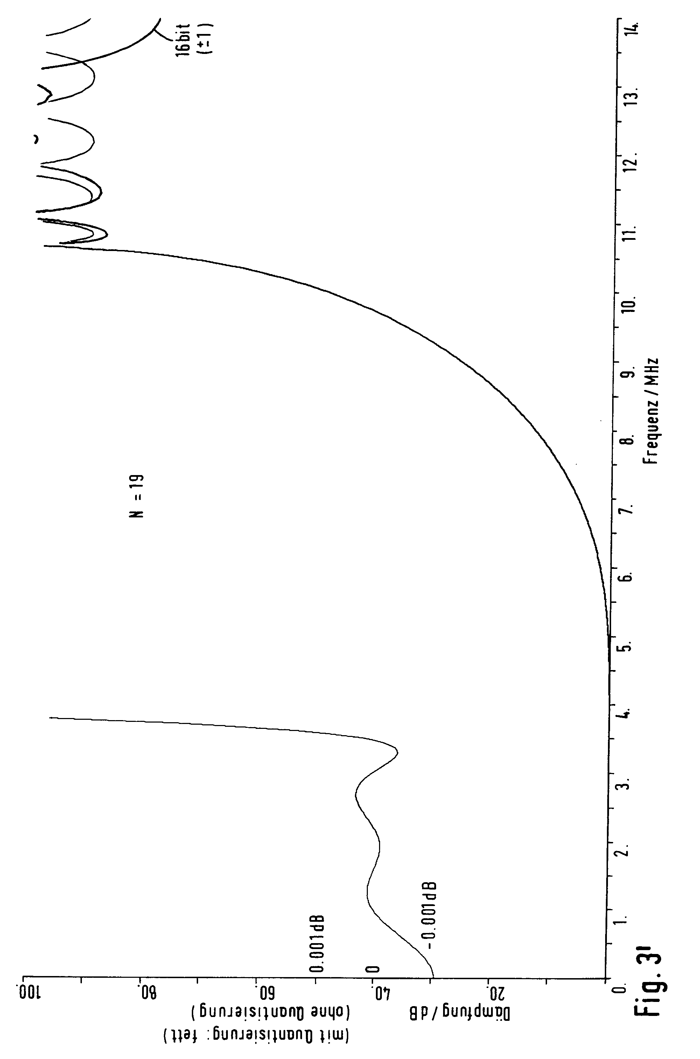

Ausgehend von der Originalstruktur der Figur 3a, welche die direkte Realisierung eines sehr breitbandigen digitalen Filters mit sehr hoher Abtastfrequenz $f_A = 1/T$ mit einer schmalen steilflankigen Sperrlücke zeigt und welche extrem aufwendig ist (Abtastratenreduktion zur Aufwandsverminderung ist nicht anwendbar), zeigen die Figuren 3b und 3c aufwandsgünstige Realisierungen einer schmalbandigen Einkanalsperre EKS unter Ausnutzung sämtlicher Möglichkeiten der digitalen Signalverarbeitung zur Minimierung des Gesamtaufwandes für einen Zweig D.

Die Lösung der Figur 3b zeigt, wie aus dem sehr breitbandigen Spektrum des eingehenden FDM-in-Signals das zu eliminierende Kanalsignal bei $f^{in}$ mit einem schmalen steilflankigen Einzelkanalbandfilter selektiert und von dem eingehenden Breitbandspektrum subtrahiert d.h. gegenphasig addiert wird. Dieser Kompensationsprozess ist genau dann auf optimale Weise möglich, wenn das Einzelkanalbandfilter eine lineare Phase (entspr. einer konstanten Gruppenlaufzeit) aufweist und wenn die Verzögerungszeit des Hauptpfades mit dem Verzögerer NT gleich der Gruppenlaufzeit des Einzelkanalbandfilters EKBF ist. Das Einzelkanalbandfilter läßt sich als nichtrekursives Filter (FIR) stets mit exakt linearer Phase realisieren. Wollte man das sehr schmalbandige Einzelkanalbandfilter (schmalbandig bezüglich $f_A$) geschlossen realisieren, so wäre der Aufwand wie bei Figur 3a hoch. Durch Anwendung der Multiratentechnik der digitalen Signalverarbeitung (Bellanger: "Digital Processing of Signals, Theory and Practice", John Wiley & Sons, New York 1989, Kapitel 10) kann der Schaltungsaufwand drastisch vermindert werden. Die Lösung zeigt Figur 3c, wobei das Einzelkanalbandfilter durch eine Kaskade eines digitalen dezimierenden Frequenzumsetzers DDFU mit einem digitalen interpolierenden Frequenzumsetzer IDFU ersetzt wird und wobei in dem DDFU die Abtastrate stufenweise herabgesetzt und im nachfolgenden IDFU transponiert dazu ebenfalls stufenweise wieder auf den ursprünglichen Wert erhöht wird.

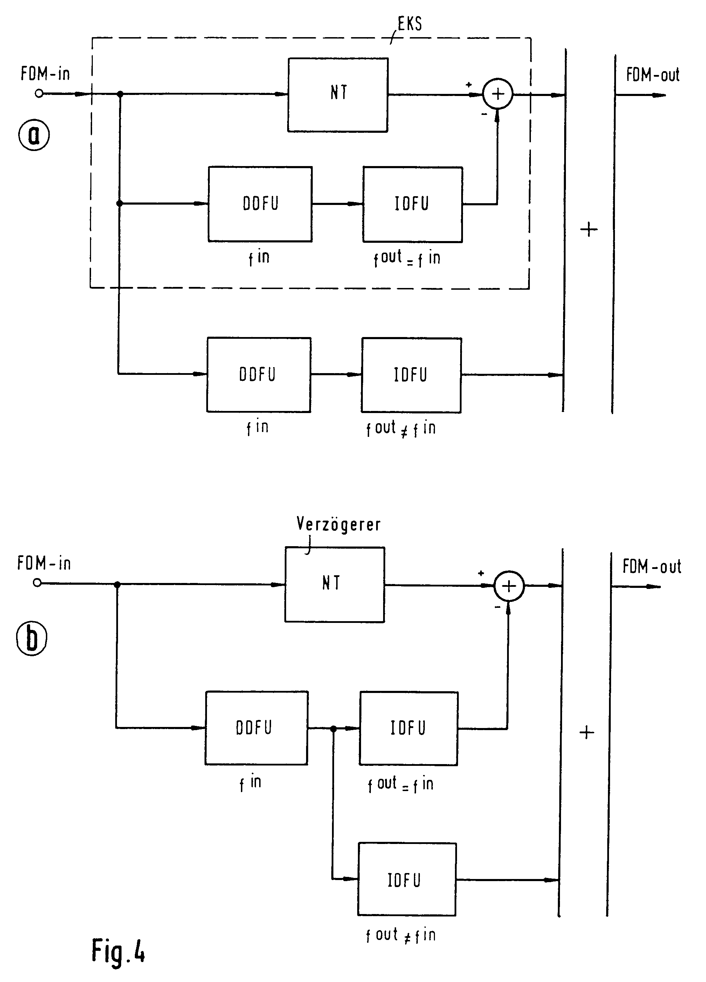

Setzt man die Struktur der Figur 3c in den Zweig 1 in Figur 2 ein, so führt das zu einer noch höheren Aufwandsverminderung bei der Änderung der Kanalanordnung. Dies ist in Figur 4a gezeigt, wobei die Blöcke DDFU jeweils identische Operationen ausführen und deshalb einer davon entfallen kann, was zu Figur 4b führt.

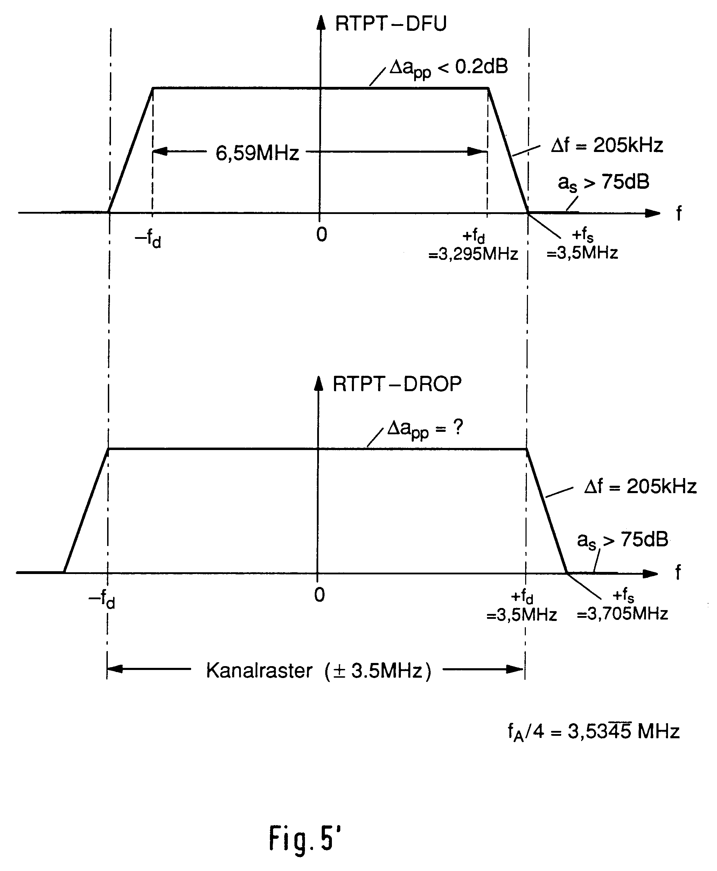

Eine ähnliche Aufwandsverminderung läßt sich auch beim Ersetzen eines Kanalsignals durch ein anderes bei der gleichen Kanalfrequenz erzielen; der Zweig Drop-Add d/a von Figur 2 erhält dann die Struktur der Figur 5.

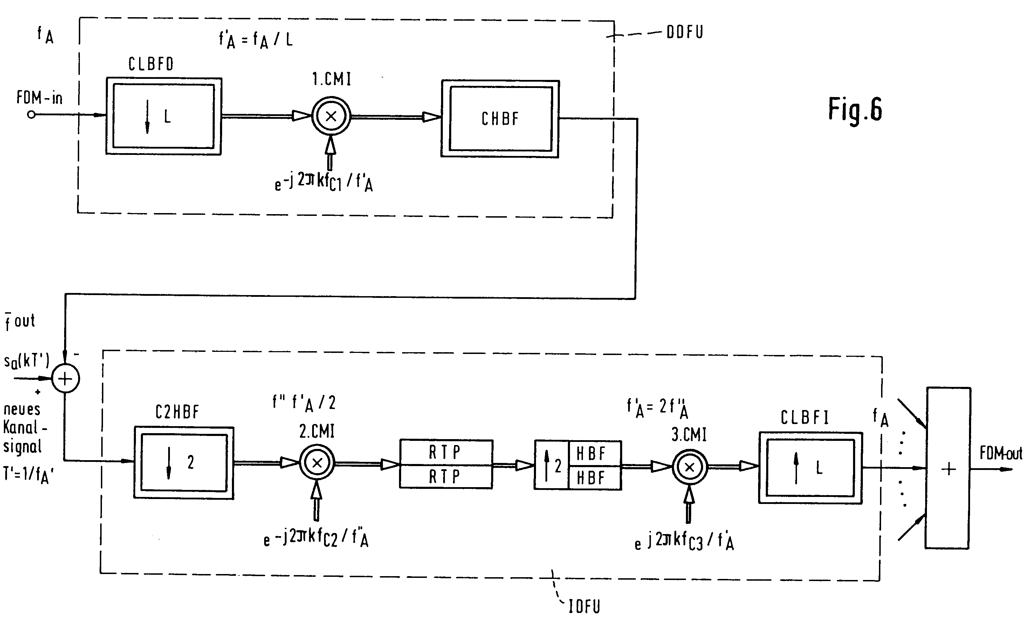

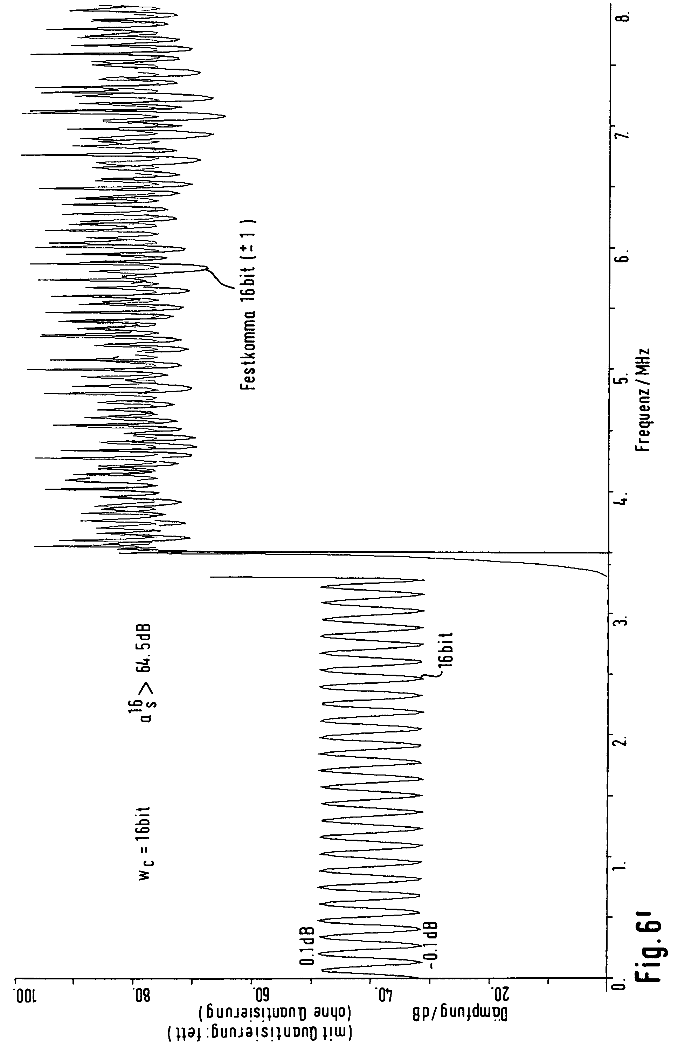

Für den unteren Zweig der Figur 5 ist in Figur 6 eine aufwandsvermindernde Realisierung z.B. für einen TV-DADFMu angegeben. Hierbei wird das reelle (oder auch komplexe) FDM-in-Signal mittels eines Dezimationsfilters CLBFD mit komplexen Koeffizienten in ein komplexwertiges Signal überführt bei gleichzeitiger Verminderung der Abtastfrequenz um den Faktor L: $f_A = f_A/L$. Mit Hilfe eines nachfolgenden ersten komplexen Mischers 1. CMI wird das zu eliminierende Signal der Frequenz $f^{in}$ in die Frequenzlage $\bar{f}^{out}$ des neu einzuspeisenden Kanalsignals gebracht ($\bar{f}^{out}$ ist bezogen auf die Abtastfrequenz $f'_A$, mit der das neue Kanalsignal eingespeist wird). Mit dem nachgeschalteten aufwandsgünstigen Halbbandfilter mit komplexem Koeffizienten CHBF wird das komplexwertige zu eliminierende Kanalsignal wieder in ein reellwertiges Signal überführt (zu CHBF-Realisierung siehe deutsche Patentschrift 37 05 207). Das DDFU-Ausgangssignal, welches noch mit den beiden unmittelbar benachbarten Kanalsignalen belegt sein kann, wird von dem neu einzuspeisenden Kanalsignal subtrahiert, wobei das neu zu addierende Signal ebenso wie das zu eliminierende Signal mindestens um den Faktor 2 überabgetastet ist, also $f_A$ größer 4B mit der Bandbreite B. Damit kann das reellwertige Differenzsignal mit einem aufwandsgünstigen Halbbandfilter C2HBF mit komplexen Koeffizienten und breiten Übergangsbereichen zwischen Durchlaß- und Sperrbereich wieder in ein komplexwertiges Signal überführt werden, wobei gleichzeitig die Überabtastfrequenz auf $f''_A = f'_A/2$ halbiert wird (C2HBF ist beschrieben in der Patentschrift DE 36 21 737). Der nachfolgende zweite komplexe Mischer 2. CMI verschiebt das komplexwertige Differenzsignal in eine Frequenzlage $\bar{\bar{f}}^{out} = 0$, oder $\pm f''_A/4$, bei der die beiden nachfolgenden Filterpaare RTP und HBF aufwandsminimal realisierbar sind. In Figur 6 wurde $\bar{\bar{f}}^{out} = 0$ angenommen, entsprechend ist dann $f_{c2} = f^{out}$. RTP ist das eigentliche steilflankige Bandbegrenzungsfilter, das die Nachbarkanalbefreiung bzw. Selektion bzw. Unterdrückung bewirkt. Es ist der aufwendigste Filterblock; da es aber bei der niedrigstmöglichen Abtastfrequenz $f''_A$ betrieben wird, ist es aufwandsminimal. In vielen Fällen kann es auch als Halbbandfilter realisiert werden. Wegen $f^{out} = 0$ hat RTP reelle Koeffizienten und ist realisiert als ein Paar identischer Filter. Das gleiche gilt für das nachfolgende Filterpaar zur Verdopplung der Abtastfrequenz auf $f'_A = 2 f''_A$. Dieses Filter ist stets als Halbbandfilter HBF realisierbar. Der nachfolgende dritte komplexe Mischer 3. CMI verschiebt das Differenzsignal, das nach RTP nur Spektralanteile in dem betrachteten Kanal der Breite B enthält, in die gewünschte Frequenzlage $f^{out} = f^{in}$ mit $\bar{\bar{f}}^{out} = 0$ gilt fc3 = $f^{out}$. Schließlich erhöht das anschließende ausgangsseitige Interpolationsfilter CLBFI mit komplexem Koeffizienten die Abtastfrequenz um den Faktor L auf den ursprünglichen Wert $f_A$. Die Filter CLBFD und CLBFI können auch als Kaskade von Teilfiltern realisiert werden, welche die Abtastrate jeweils um einen Teilfaktor von L verändern. Das Eingangssignal FDM-in kann auch komplexwertig eingespeist werden, wenn das höherkanalige FDM-Signal zuvor noch in Gruppen umgesetzt worden ist. In entsprechender Weise kann auch das Ausgangssignal FDM-out ebenfalls komplexwertig sein.

Die verwendeten Filter müssen zumindest in den Teilsystemen, die zur Elimination von Kanalsignalen (Drop-Funktion) beitragen, mindestens näherungsweise eine lineare Phase (=konstante, frequenzunabhängige Gruppenlaufzeit) aufweisen. Dies wird vorzugsweise erreicht durch die Verwendung nichtrekursiver (FIR) Filter mit linearer Phase (symm. Impulsantwort). Es können aber auch rekursive (IIR) Filter mit geebneter Laufzeit (z.B. mit Allpässen) zum Einsatz kommen.

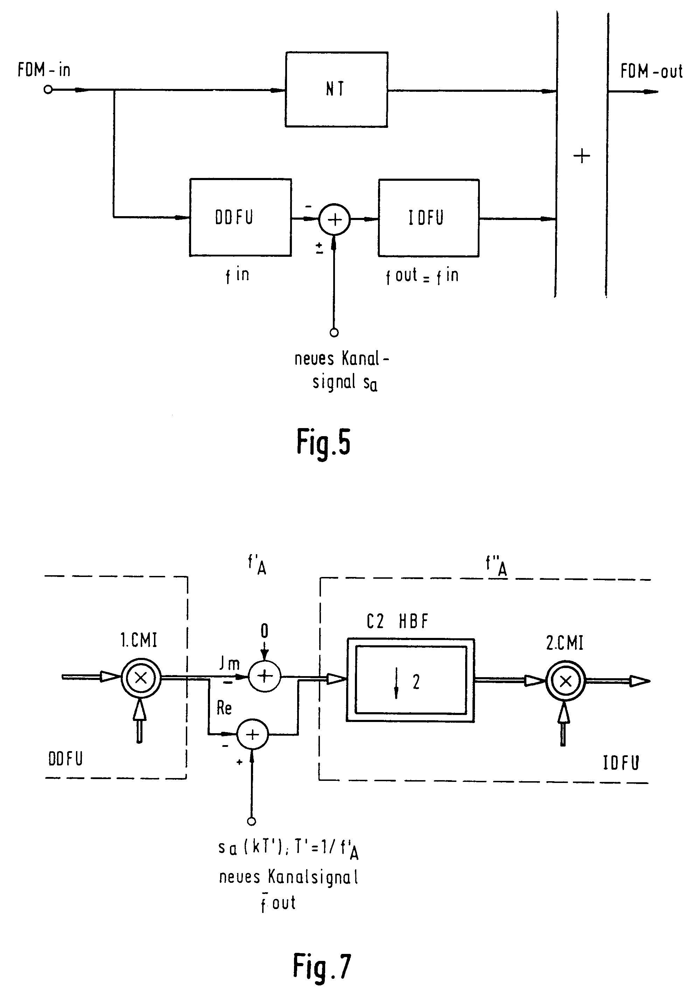

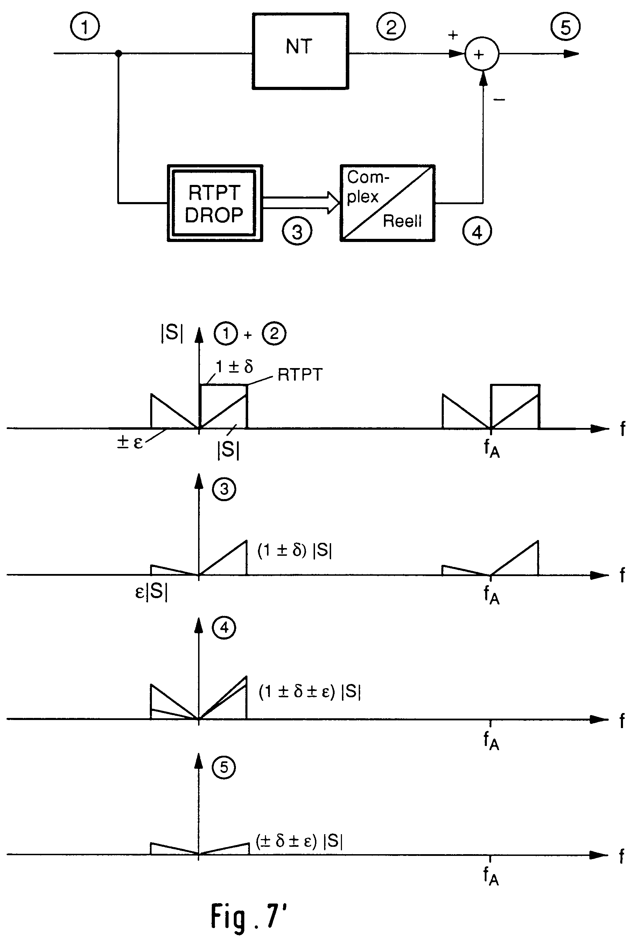

Eine geringe Aufwandsverminderung gegenüber der Realisierung nach Figur 6 läßt sich durch eine Anordnung gemäß Figur 7 erzielen. Die Filter zwischen ersten und zweiten komplexen Mischer nämlich CHBF und C2HBF haben dieselbe Filterlänge d.h. die gleiche Koeffizientenzahl, arbeiten aber bei unterschiedlichen Abtastraten. In der Lösung nach Figur 7 wurde das Filter CHBF in das nachfolgende Filter integriert, wobei der Aufwand von C2HBF, das nun mit komplexem Signal gespeist wird, zwar verdoppelt wird, aber der Gesamtaufwand sich um den Faktor 1/3 vermindert. Das neue Kanalsignal $s_a$ kann wahlweise mit dem Realteil (Fig. 7) oder dem Imaginärteil des komplexen Ausgangssignals des ersten komplexen Mischers (1. CMI) zusammengefaßt werden.

Der Aufwand für die Änderung der Kanalbelegung gemäß Figur 4b läßt sich nochmals vermindern, in dem man den einen IDFU einspart und dafür den verbleibenden IDFU gemäß Figur 6 realisiert mit der Modifikation, daß der dritte komplexe Mischer CMI und das ausgangsseitige CLBFI Filter doppelt vorgesehen werden und zwar einmal mit der Mischfrequenz $f_{c3} = f^{out} = f^{in}$ für den Zweig zur Differenzbildung / Kompensation und zum andern mit der Mischfrequenz $f_{c3} \neq f^{in} \neq f^{out} = f_{c3}$ für den unteren Zweig mit der Belegung der neuen Frequenzlage, wobei $\bar{\bar{f}}^{out} = 0$ vorausgesetzt aber nicht zwingend notwendig ist.

Die Figur 1' zeigt das Problem auf, welches durch die vorliegende Erfindung gelöst wird. Ganz oben ist das Nutzspektrum $|S_1|$ der Kanäle N-1, N und N+1 über der Frequenz aufgetragen. Darunter ist die Übertragungscharakteristik $|H_{DFU}|$ des bandbegrenzenden Einzelkanalbandfilters gezeichnet, welches auch als Einzelkanalbandsperre eingesetzt wird, indem seine Charakteristik vom eingehenden Summensignal subtrahiert wird: es entstehen die Spektralverhältnisse, wie sie darunter gezeichnet sind. Da die Übergangsbereiche der Filterdämpfungsverläufe über die Bandgrenzen gehen, entstehen so unerwünschte Restspektralanteile, wie ganz unten gezeichnet.

Um alle zu eliminierenden Spektralanteile in dem gewünschten Maße zu unterdrücken, muß sich daher bei der Drop-Funktion der Einzelkanalbandsperre der Durchlaßbereich des die Durchlaßbandbreite bestimmenden Filters in DDFU gemäß Figur 4b oder Figur 5 über weite Bereiche der Flanken des Signalspektrums erstrecken. Dies gilt auch für den Block IDFU für fout = fin in Figur 4b und für Figur 5. Für den Add-Pfad bzw. den Umsetzpfad gemäß Figur 4b (hier IDFU für fout = fin, unten) können dagegen zur Aufwandsverminderung die Filterflanken mit den Flanken des Signalspektrums zusammenfallen. Dies gilt auch für die Bandbegrenzung für neue einzuspeisende Kanalsignale $s_a$ gemäß Figur 5, 6 oder 7.

Da das TV-Spektrum breiter sein kann als das Kanalraster, ist beim ersten Einspeisen mittels eines eigenen Filters (in Fig. 2' reelles Tiefpaßfilter) im digitalen Frequenzumsetzer DFU-RTP das TV-Spektrum angemessen bandzubegrenzen. Eine hierfür geeignete DFU-DAMUX-Struktur zeigt die Figur 2'a; der Aufbau der Einrichtung für UKW bzw. digitalen Satellitenrundfunk ist sinngemäß in den Figuren 2'b bzw. 2'c dargestellt. Diese Strukturen sind detailliertere Ausführungen der Figuren 5, 6 oder 7. Die Figur 5' zeigt das Prinzip der vorliegenden Erfindung, in dem für das Drop-Filter der breitere Durchlaßbereich (etwa oder mindestens Kanalrasterbreite) und für das Filter im Add-Zweig bzw. im Umsetzerpfad ein Filter mit der kleineren Durchlaßbreite verwendet wird. Bei unverändertem Kanalraster werden deshalb die beiden unterschiedlichen reellen Tiefpässe etwas aufwendiger als bei der Hauptanmeldung, sie können jedoch als reelle Bandfilter oder Halbbandfilter realisiert werden.

Obwohl diese unterschiedlichen RTP-Filter aufwendiger werden, werden die zusätzlichen Filter in dem dezimierenden bzw. interpolierenden digitalen Frequenzumsetzer DDFU bzw. IDFU aufwandsgünstiger, und ihre Anzahl verringert sich, wodurch sich weniger Rauschbeiträge in den Frequenzumsetzerkaskaden ergeben und wodurch eine größere Rippeldämpfung im Durchlaßbereich der Einzelfilter zulässig ist.

Die Figur 7' zeigt die prinzipielle Wirkungsweise der Drop-Funktion mit komplexwertigen Filtern. Im oberen Teil ist ein Blockschaltbild dargestellt mit dem gemeinsamen Zweig der Einzelkanalbandsperren, in dem das eingehende FDM-Summensignal über ein Verzögerungsglied NT zum Ausgang geleitet wird. Darunter ist der Drop-Zweig gezeichnet, der aus dem komplexwertigen Filter RTPT mit komplexem Ausgangssignal besteht, welches über ein Glied C/R in ein reelles Ausgangssignal umgesetzt wird, welches vom Summensignal subtrahiert wird. Darunter sind verschiedene Spektren über der Frequenz f aufgetragen, welche entsprechend der eingekreisten Ziffern den damit gekennzeichneten Punkten im oberen Blockschaltbild zugeordnet sind.

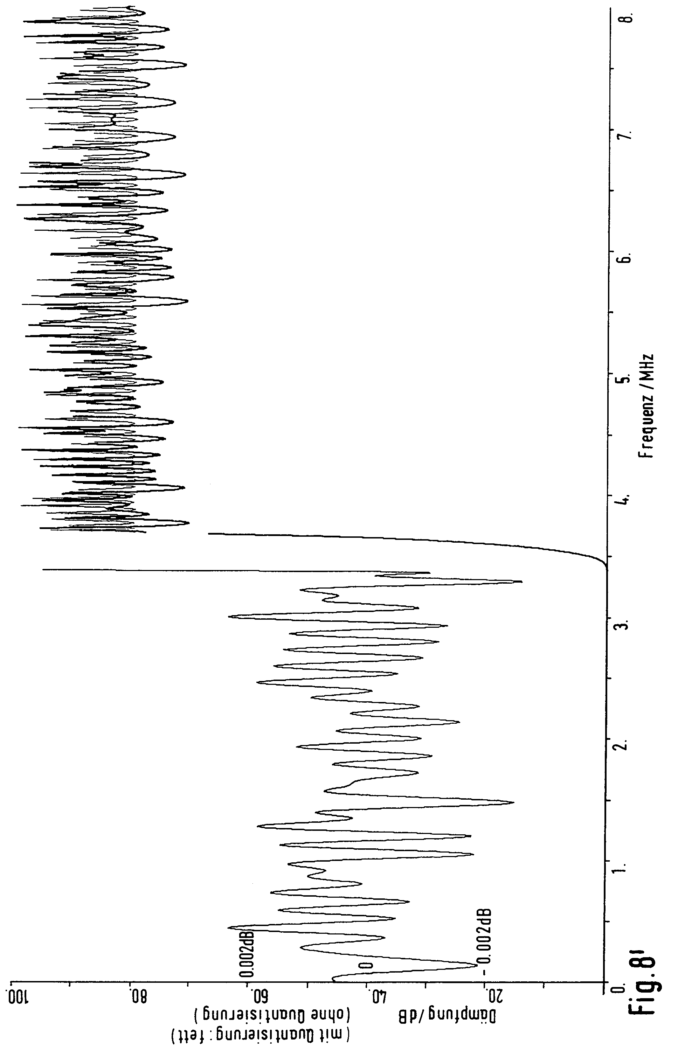

Die Figuren 3' und 6' zeigen Dämpfungskurven, aufgetragen über der Frequenz für reelle Tiefpässe für digitale Frequenzumsetzer im Add-Zweig für TV, und in Figur 8' ist eine solche Dämpfungskurve für ein Drop-Filter RTP aufgetragen. In allen drei Figuren bedeuten die dünn aufgetragenen Frequenzgänge eine Filterung ohne Quantisierungder Filterkoeffizienten, während die etwas dickeren Dämpfungskurven eine Filterung mit quantisierten Koeffizienten darstellen.

Es folgt nun ein Vergleich der Struktur nach Figur 6 gemäß Hauptanmeldung und der Struktur nach Figur 2', hier am Beispiel der Figur 2'a. Die Abmischung nach dem Eingangsfilter C4BFT $\downarrow$ 4 und die Aufmischung vor C4BFT $\uparrow$ 4 sind identisch bis auf das Vorzeichen der Frequenzverschiebung. Gegenüber dem ursprünglichen Filter CHBF im Drop-Pfad der Figur 6 vermindert sich der Aufwand für das reelle Halbbandfilter RHBFT durch kleinere Filterlänge, da das Spektrum nicht mehr exzentrisch im Durchlaßbereich zu liegen kommt. Schließlich entfällt im Drop-Pfad das zweite komplexe Halbbandfilter CHBF, wodurch weniger Aliasing und weniger Durchlaßbereichsrippeladdition entsteht. Das komplexe Halbbandfilter CHBFT $\downarrow$ 2 im Add-Pfad ist identisch mit dem ursprünglichen komplexen Halbbandfilter CHBF.

Aus Figur 7' geht hervor, daß die Dropwirkung des komplexen Tiefpaßfilters RTPT mit komplexem Koeffizienten in gleichem Maße vom Rippel $\delta$ des Durchlaßbereichs und vom Rippel $\varepsilon$ des Sperrbereichs abhängt. Die Übertragungsfunktion des komplexen Drop-Filters ist für reelle Ein- und Ausgangssignale gegeben durch

$$H_{DROP} = 1 - (1 \pm \delta \pm \varepsilon) = \pm \delta \pm \varepsilon \quad (1),$$

woraus die Forderung

$$\delta \approx \varepsilon \quad (2)$$

resultiert. Damit ist in Abweichung zu Figur 5' eine Spezifikation dieses Filters als Halbbandfilter HBF inspiriert, falls der Übergangsbereich geeignet plaziert werden kann.

**Patentansprüche**

1. Drop-and-Add-Multiplexer zur Umsetzung eines digitalen FDM-Signales mit hoher Kanalzahl und zur Aufnahme von Signalen weiterer Kanäle, wobei Einzelkanalsperren vorgesehen sind, in denen das ankommende FDM-Signal gefiltert wird, indem erwünschte Kanäle durchgelassen bzw. frequenzumgesetzt werden, und freizuschaltende Kanalfrequenzen gesperrt werden, wobei Frequenzumsetzer vorgesehen sind, in denen die Signale ankommender Kanäle in andere Frequenzlagen umgesetzt (Frequenzumsetzungs-Pfad) und die Signale weiterer Kanäle jeweils in den hierfür vorgesehenen Frequenzbereich umgesetzt (Add-Pfad) und die Ausgangssignale der Umsetzer und der Einzelkanalsperren zum abgehenden FDM-Signal zusammengefasst werden (Fig. 2), wobei für die Einzelkanalsperren (EKS) ein gemeinsamer erster Pfad vorgesehen ist, auf dem das FDM-in-Eingangssignal durchgeschaltet wird, und wobei der zweite Pfad (DROP-Pfad) einer Einzelkanalsperre ein Einzelkanalbandfilter (EKBF) und einen Vorzeichen-Inverter aufweist (Fig. 3b), dadurch gekennzeichnet, daß die Durchlaßbandbreite im DROP-Pfad der Einzelkanalsperren größer ist als die Durchlaßbandbreite in einem Add- oder Frequenzumsetzungspfad (Fig. 5').

2. Drop-and-Add-Multiplexer (DAMUX) nach Anspruch 1, wobei die Kanäle in Kanalraster der Frequenzbreite D angeordnet sind, dadurch gekennzeichnet, daß die Durchlaßbandbreite des Einzelkanalbandfilters (EKBF) im DROP-Pfad größer oder gleich dem Kanalraster D ist (Fig. 5').

3. DAMUX nach Anspruch 2, dadurch gekennzeichnet, daß die Durchlaßbandbreite in einem Add- oder Frequenzumsetzungspfad, welche der Bandbreite des Nutzspektrums eines Kanals entspricht, erweitert um die beiden Übergangsbereiche kleiner oder mindestens gleich dem Kanalraster D ist (Fig. 5').

4. DAMUX nach einem der vorhergehenden Ansprüche, dadurch gekennzeichnet, daß die Add- und Frequenzumsetzungspfade jeweils Einzelkanalbandfilter (EKBF) aufweisen, welche aus einer Kaskade eines digitalen dezimierenden Frequenzumsetzers und eines interpolierenden digitalen Frequenzumsetzers (DDFU und IDFU) besteht (Fig. 4b).

5. DAMUX nach einem der vorhergehenden Ansprüche, dadurch gekennzeichnet, daß zur Kompensation der Laufzeit im Drop-Pfad der Einzelkanalsperre (EKS) das ankommende FDM-in-Signal im gemeinsamen Pfad der Kanalsperren um die gleiche Laufzeit verzögert wird (Fig. 3b und 3c).

6. DAMUX nach einem der vorhergehenden Ansprüche, dadurch gekennzeichnet, daß die Durchlaßbandbreite im Drop-Pfad auf jeden Fall erhalten bleibt, auch wenn ein Add-Pfad in den Drop-Pfad einmündet, und daß der Add-Pfad vor der Einmündung auf seine kleinere Durchlaßbandbreite beschränkt.

7. DAMUX nach Anspruch 6, dadurch gekennzeichnet, daß zur Ersetzung eines Kanals durch einen anderen bei derselben Frequenz $f_d^{in}$ ein einziger interpolierender digitaler Frequenzumsetzer (IDFU) vorgesehen ist, in den das Signal $s_a$ des neuen Kanals mit positivem oder negativem Vorzeichen und das Ausgangssignal des vorgeschalteten dezimierenden digitalen Frequenzumsetzers (DDFU) mit negativem Vorzeichen bzw. in einer Phasenlage eingespeist wird, sodaß das zu ersetzende Kanalsignal im FDM-out-Signal eliminiert ist (Fig. 5).

8. DAMUX nach einem der Ansprüche 4 bis 7, dadurch gekennzeichnet, daß der digitale dezimierende Frequenzumsetzer (DDFU) aus einer Kaskade eines komplexen dezimierenden Bandfilters (C4BFT↓4, C4BFU↓4, C4BFD↓4), einem komplexen Mischer und einem reellen Tiefpaßfilter (RTPDT, RTPDU, RTPDD) besteht, welch letzteres die Durchlaßbandbreite des Drop-Pfades bestimmt (Figur 2').

9. DAMUX nach Anspruch 8, dadurch gekennzeichnet, daß der interpolierende digitale Frequenzumsetzer (IDFU) aus einer Kaskade eines komplexen Mischers mit einem komplexen interpolierenden Bandfilter (C4BFT ↓4, C4BFU↓4, C4BFD↓4) besteht, welche Kaskade in Transposition zu der Eingangskaskade des digitalen dezimierenden Frequenzumsetzers (DDFU) realisiert ist (Figur 2').

10. DAMUX nach Anspruch 8 oder 9, dadurch gekennzeichnet, daß der Add-Pfad aus einer Kaskade eines dezimierenden komplexen Bandfilters (CHBFT↓2, CHBFU↓2, CHBFD↓2), einem komplexen Mischer und einem reellen Tiefpaßfilter (RTPT, RTPU, RTPD) besteht (Figur 2') und daß dieser Add-Pfad direkt oder invertiert über einen Addierer in den Drop-Pfad an einer Stelle mit der tiefsten Abtastfrequenz eingeführt wird.

11. DAMUX nach Anspruch 10, dadurch gekennzeichnet, daß der Add-Pfad hinter dem reellen Tiefpaßfilter des digitalen dezimierenden Frequenzumsetzers (DDFU) in den Drop-Pfad eingeführt wird (Figur 2').

12. DAMUX nach einem der Ansprüche 8 bis 11, dadurch gekennzeichnet, daß hinter dem komplexen Mischer des digitalen dezimierenden Frequenzumsetzers (DDFU) ein weiteres dezimierendes reelles Filter oder eine Kaskade davon eingefügt sind (Figur 2'a, Figur 2'b).

13. DAMUX nach Anspruch 12, dadurch gekennzeichnet, daß vor dem Mischer des interpolierenden digitalen Frequenzumsetzers (IDFU) in transponierter Form zum dezimierenden Frequenzumsetzer ein interpolierendes reelles Filter oder eine Kaskade davon eingefügt sind (Figur 2'a, Figur 2'b).

14. DAMUX nach einem der vorhergehenden Ansprüche, dadurch gekennzeichnet, daß die die Durchlaßbandbreite bestimmenden Filter im Drop-Pfad bzw. im Add/Umsetzpfad durch ein Paar reeller Bandfilter oder reeller Halbbandfilter realisiert sind.

15. DAMUX nach einem der vorhergehenden Ansprüche, dadurch gekennzeichnet, daß die die Durchlaßbandbreite bestimmenden Filter in Drop-Pfad etwa die gleiche Rippeldämpfung im Durchlaß- und Sperrbereich $\delta \approx \varepsilon$ aufweisen.

Fig.1

$|S_{ein}|$

N−1    N    N+1

BT    BT    f

$|H_{DFU}|$

f

$|H_{DROP}| = 1 - |H_{DFU}|$

f

$|S_{aus}|$

N−1    unerwünschter Restspektralanteil    N    N+1

BT    f

$|S_{ein}|$    NT    +    $|S_{aus}|$

−

DFU

Kanalraster ( ± 3.5MHz )

Fig. 1'

Fig.2

32/64 - Kanal - System
452.4 / 904.8 MHz

## Fig. 2'a

CGBF ↓4/8 → C4BFT ↓4 → ⊗ Kanalmittenfrequenz ±30Hz → RHBFT ↓2 ($f_m=0$) → RTPDT → ⊕ (−) → IPF2T ↓2 ($f_m=0$) → ⊗ Kanalmittenfrequenz ±30kHz → C4BFT ↑4 → ⊕ → CGBF ↑4/8 → ⊕

N*T → ⊕

TV-ZF $f_m=36.4$ MHz → A/D → CHBFT ↓2 ($f_m=20.197$MHz −6.06MHz) → ⊗ (±7kHz) → RTPT ($f_m=0$)

## Fig. 2'b

CGBF ↓4/8 → C4BFU ↓4 → ⊗ Kanalmittenfrequenz ±7kHz → DEZ5U ↓5 ($f_m=0$) → DEZ3U ↓3 → DEZ2U ↓2 → RTPDU → ⊕ (−) → IPF 2U ↓2 ($f_m=0$) → IPF 3U ↑3 → IPF5U ↑5 → ⊗ Kanalmittenfrequenz ±7kHz → C4BFU ↑4 → ⊕ → CGBF ↑4/8 → ⊕

UKW-ZF $f_m=10.7$MHz → A/D → CHBFU ↓2 ($f_m=1.2745$MHz −1.2745MHz) → ⊗ (±1kHz) → RTPU ($f_m=0$)

## Fig. 2'c

CGBF ↓4/8 → C4BFD ↓4 → ⊗ Kanalmittenfrequenz ±30kHz → RTPDD ($f_m=0$) → ⊕ (−) → ⊗ Kanalmittenfrequenz ±30kHz → C4BFD ↑4 → ⊕ → CGBF ↑4/8 → ⊕

DSR-ZF $f_m=14.13$MHz → A/D → CHBFD ↓2 ($f_m=14.13$MHz −14.13MHz) → ⊗ (±50MHz) → RTPD ($f_m=0$)

EP 0 660 552 A2

ⓐ

FDM-in ⊸───────→ | EKS | ──────────┤ + FDM-out →

f in

ⓑ

Verzögerer

FDM-in ⊸──────→─┬──→ | N T | ──────→ + ⊕ ──┤ + FDM-out →
                │                          -
                └──→ | EKBF | ──────────────┘

f in

ⓒ

Verzögerer

FDM-in ⊸──→─┬──────→ | N T | ──────→ + ⊕ ──┤ + FDM-out →
            │                              -
            └──→ | DDFU | ──→ | IDFU | ────┘

f in        f out = f in

# Fig.3

Fig. 3'

N = 19

16 bit
(±1)

(mit Quantisierung: fett)
(ohne Quantisierung)

0.001 dB

0

-0.001 dB

Dämpfung / dB

100.

80.

60.

40.

20.

0.

0.   1.   2.   3.   4.   5.   6.   7.   8.   9.   10.   11.   12.   13.   14.

Frequenz / MHz

EP 0 660 552 A2

EKS

FDM-in

NT

+
+
-

FDM-out

ⓐ

DDFU

f in

IDFU

f out = f in

+

DDFU

f in

IDFU

f out ≠ f in

Verzögerer

FDM-in

NT

+
+
-

FDM-out

ⓑ

DDFU

f in

IDFU

f out = f in

+

IDFU

f out ≠ f in

# Fig.4

RTPT−DFU

$\Delta a_{pp} < 0.2dB$

6,59MHz

$\Delta f = 205kHz$

$a_s > 75dB$

$-f_d$  0  $+f_d$  $+f_s$
 $=3,295MHz$  $=3,5MHz$

RTPT−DROP

$\Delta a_{pp} = ?$

$\Delta f = 205kHz$

$a_s > 75dB$

$-f_d$  0  $+f_d$  $+f_s$
 $=3,5MHz$  $=3,705MHz$

Kanalraster ($\pm$ 3.5MHz)

$f_A/4 = 3{,}53\overline{45}$ MHz

Fig. 5'

fA

f'A = fA / L

DDFU

CLBFD

FDM-in

↓ L

1.CMI

⊗

$e^{-j 2\pi k f_{C1} / f'_A}$

CHBF

**Fig.6**

f out

sₐ(kT')

neues
Kanalsignal
T'=1/fA'

C2HBF

↓ 2

f" f'A / 2
2.CMI

⊗

$e^{-j2\pi k f_{C2} / f"_A}$

RTP
RTP

↑2

HBF
HBF

f'A= 2f"A
3.CMI

⊗

$e^{j2\pi k f_{C3} / f'_A}$

CLBFI

↑ L

fA

FDM-out

IDFU

EP 0 660 552 A2

Fig. 6'

$w_c = 16\,bit$    $a_s^{16} > 64.5\,dB$

$0.1\,dB$

$-0.1\,dB$

16bit

Festkomma 16bit $(\pm 1)$

(mit Quantisierung: fett)
(ohne Quantisierung)

Dämpfung/dB

Frequenz/MHz

EP 0 660 552 A2

FDM-in

NT

FDM-out

DDFU

$-$
$+$
$\pm$

IDFU

f in

f out $_=$ f in

$+$

neues Kanalsignal s$_a$

## Fig.5

f'$_A$

f"$_A$

1.CMI

0

C2  HBF

2.CMI

Jm
$-$

$+$

$\downarrow$ 2

$\times$

Re
$-$

$+$

$\times$

DDFU

IDFU

s$_a$(kT'); T'=1/ f'$_A$
neues Kanalsignal
$\bar{f}$out

## Fig.7

Fig. 7'

Fig.8'

EP 0 660 552 A2